# EUROPEAN PATENT APPLICATION

(11) **EP 2 762 932 A1**
(43) Date of publication of application: **06.08.2014**
(21) Application number: 12836089.8
(22) Date of filing: 27.09.2012
(51) Int. Cl.: G02B 5/30, B32B 7/02, G02B 5/12, G03B 11/00

(54) **OBJECT HAVING LATENT IMAGE AND LATENT IMAGE PHOTOGRAPHY DEVICE WHICH PHOTOGRAPHS SAME**

(30) Priority: 28.09.2011 JP 2011212022
(71) Applicant: FUJIFILM Corporation, Tokyo 106-0031 (JP)
(72) Inventor: HASEGAWA Kazuhide, Ashigarakami-gun Kanagawa 258-8577 (JP)
(74) Representative: HOFFMANN EITLE
(86) International application number: PCT/JP2012/074819
(87) International publication number: WO 2013/047633

(57) **Abstract**

According to the present invention, provided is a birefringent transfer foil, comprising a temporary support, an orientation layer, a birefringent layer (preferably a patterned optically anisotropic layer) formed from a composition comprising a liquid-crystal compound having at least one reactive group, said orientation layer being in contact with the temporary support or a releasing layer, wherein the releasing layer being in contact with the temporary support, and said orientation layer being a layer comprising a cellulose alkyl ether or a hydroxyalkyl derivative of cellulose alkyl ether. In the birefringent transfer foil of the present invention, the above orientation layer also functions as a protective layer and a detachment layer, enabling to reduce the manufacturing cost.

## Description

### Technical Field

The present invention relates to a product having latent image. More specifically, the present invention relates to a product from which a latent image, being nearly invisible under ordinary unpolarized light sources, becoming visible when held under a polarizing plate, and being sharply visible when viewed from a specific direction, is visible. The present invention also relates to a device for identifying the latent image of such a product.

### Background Art

A patterned birefringent product has a latent image being nearly invisible under ordinary unpolarized light sources and becoming visible when held under a polarizing plate. PTL 1 and PTL 2 disclose examples of processes of producing patterned birefringent products and propose application of the products for preventions of counterfeiting.

A patterned birefringent product can be readily applied to means for preventions of counterfeiting if its latent image can be sharply identified and photographed. However, polarized light has lower intensity compared to non-polarized light. Light from the latent image observed through a polarizing plate thus becomes weak, rendering the latent image susceptible to environmental light and faint. When a product having a reflective layer that specularly reflects light is used, the lighting needs to correspond to the observing position, which puts a limitation on the arrangement. The latent image easily becomes faint in a patterned birefringent product having a diffuse reflective layer as described in PTL 3, as the light becomes weaker due to diffusion of reflected light.

### Citation List

### Patent Literature

PTL 1: Japanese Unexamined Patent Publication (KOKAI) No. 2009-69793
PTL 2: Japanese Unexamined Patent Publication (KOKAI) No. 2010-113249
PTL 3: Japanese Unexamined Patent Publication (KOKAI) No. 2010-211063

### Summary of the invention

The object of the present invention is to provide a product having a latent image which becomes visible when observed through a polarizing plate, in which the latent image can be sharply identified or photographed. It is another object of the present invention to provide a device for identifying the latent image of such a product.

The present inventors have conducted intensive research to achieve the above object and found out that the above object can be achieved by employing a configuration in which the latent image is identified only in a specific direction.

The present invention thus provides [1] to [16] below:
[1] A product comprising a patterned optically anisotropic layer having two or more regions of different birefringence and a reflective layer having a function selectively reflecting an incident light to a specific direction.
[2] The product according to [1], wherein the reflective layer is a retroreflective layer.
[3] The product according to [2], wherein the retroreflective layer comprises a corner cube or a microsphere.
[4] The product according to [1] or [2] ,wherein the patterned optically anisotropic layer is formed by a method comprising the following steps (1) to (3) in this order:
   (1) heating or irradiating with light a layer formed of a composition comprising a liquid-crystal compound;
   (2) subjecting the layer to patterned light exposure; and
   (3) heating the layer obtained to 50°C or higher but not higher than 400°C.
[5] The product according to any one of [1] to [4], which comprises a printed layer.
[6] The product according to any one of [1] to [5], which comprises a support.
[7] The product according to any one of [1] to [6], which comprises the patterned optically anisotropic layer, a support, and the reflective layer in that order.
[8] The product according to any one of [1] to [7], which comprises the patterned optically anisotropic layer, the reflective layer, and a support in that order.
[9] The product according to any one of [1] to [8], wherein the patterned optically anisotropic layer represents a curve.
[10] A device of photographing a latent image that becomes visible in observation of the product according to any one of [1] to [9] through a polarizing plate, comprising an optical path system for light illuminating the product, an optical path system for reflecting light, and an imaging element, wherein the imaging element is arranged on the optical path for reflecting light, the reflecting light being a reflecting light of incident light reflected selectively in a specific direction,
[11] The device of photographing a latent image according to [10], which is provided with a half mirror for reflecting the reflecting light toward the direction of the imaging element.
[12] The device of photographing a latent image according to [10] or [11] comprising a first polarizing plate arranged approximately perpendicular to the optical path of illuminating light at a position which the illuminating light goes through, and a second polarizing plate arranged approximately perpendicular to the optical path of reflecting light at a position which the reflecting light goes through.
[13] The device of photographing a latent image according to [12], which has a unit for rotating the polarizing plates independently to each other.
[14] The device of photographing a latent image according to [10] or [11], wherein the reflective layer is a retroreflective layer, and a polarizing layer is arranged approximately perpendicular to the optical path of illuminatating light and the optical path of reflecting light, at a position which incident light and the reflecting light go through.
[15] The device of photographing a latent image according to [14], which has a unit for rotating the polarizing plate.
[16] The device of photographing a latent image according to any one of [10] to [15] having a light source.

### Effect of the Invention

The present invention provides a patterned birefringent product from which a sharp latent image is visible when viewed from a specific direction. By the above properties, a latent image can be identified or photographed from a specific direction without an influence of specular reflection, even when a product having a birefringent pattern on a curved surface is observed. The need for vicinally positioning the birefringent pattern and a polarizing film is eliminated. Thus, by using a polarizing film remotely arranged or by using a device of photographing a latent image having an internal polarizing plate, a sharp latent image can be identified or photographed remotely.

### BRIEF DESCRIPTION OF THE DRAWINGS

Fig. 1 is a drawing schematically showing a basic configuration of the product of the present invention.
Fig. 2 is a drawing schematically showing configurations of products of the present invention each having a support.
Fig. 3 is a drawing schematically showing a configuration of a product of the present invention having an orientation layer.
Fig. 4 is a drawing schematically showing configurations of products of the present invention each having an adhesive layer.
Fig. 5 is a drawing schematically showing configurations of products of the present invention each having a printed layer.
Fig. 6 is a drawing schematically showing configurations of transfer-type products of the present invention each having a dynamic property control layer and a transfer layer.
Fig. 7 is a drawing schematically showing configurations of products of the present invention each having a surface layer.
Fig. 8 is a drawing schematically showing configurations of products of the present invention each having multiple patterned optical anisotropic layers.
Fig. 9 is a drawing schematically showing a device for photographing the latent image of the product of the present invention.
Fig. 10 is a drawing schematically showing a device for photographing the latent image of the product of the present invention having a retroreflective layer.
Fig. 11 is a drawing schematically showing a device having one polarizing plate, for photographing the latent image of the product of the present invention.
Fig. 12 is a drawing schematically showing a device having two polarizing plates, for photographing the latent image of the product of the present invention.
Fig. 13 is a drawing showing the pattern of the patterned light exposure conducted in the Example.
Fig. 14 is drawings showing results of measurements of the film prepared in Examples that was transferred to a retroreflective tape (a), or diffuse reflective tape (b), under a condition with a room lamp on.
Fig. 15 is drawings showing results of measurements of the film prepared in Examples that was transferred to a retroreflective tape (a), or diffuse reflective tape (b), in a dark room.

### MODES OF CARRYING OUT THE INVENTION

The present invention is described in detail below.

In the present description, a "to" is employed to mean that the upper limit value and lower limit value of the numeric values indicated before and after the "to" are included.

In the present description, Re denotes a retardation. Re can be measured by the spectral phase difference method by conversion from a transmission or reflectance spectrum to a phase difference by the method described in the Journal of the Optical Society of America, Vol. 39, p. 791-794 (1949) or Japanese Unexamined Patent Publication (KOKAI) No. 2008-256590. The above references are measurement methods that employ transmission spectra. Since the light passes through the optically anisotropic layer twice, particularly in the case of reflection, half of the phase difference converted from the reflection spectrum can be employed as the phase difference of the optically anisotropic layer. Re denotes the frontal retardation, unless otherwise indicated. Re(*λ*) is a retardation measured by using light of the wavelength *λ* nm. Re in the present description means the retardation measured at the wavelengths of 611 ± 5 nm, 545 ± 5 nm, and 435 ± 5 nm for R, G, and B, and means the retardation measured at a wavelength of 545 ± 5 nm when no reference to color is given.

In the present description, the term "essentially" means that a tolerance of less than ±5° with respect to the precise angles can be allowed. Difference from the precise angles is preferably less than 4°, and more preferably less than 3°. Also, use of the word "essentially" in reference to retardation or birefringence means a difference in retardation of within ± 5°, inclusive. A "retardation of essentially 0" means a retardation of 5 nm or less. Unless specifically stated otherwise, the wavelength at which a refractive index is measured refers to any wavelength within the visible light region. In the present description, the term "visible light" refers to light with a wavelength of from 400 to 700 nm.

### [A reflective layer having a function selectively reflecting an incident light to a specific direction]

The product of the present invention has a reflective layer having a function selectively reflecting an incident light to a specific direction. Having such a layer, the latent image of the present invention can be observed sharply in a specific direction. The specific direction of the reflecting light can be in any direction. A preferable example includes a direction identical to the direction of incident light. A reflection having a function selectively reflecting incident light to the direction identical to the incident light is referred to as retroreflection, and a reflective layer having such an reflecting function is referred to as a retroreflective layer. A retroreflective layer will be described in detail below.

### [The latent image]

In the present description, the term "latent image" refers to an image being invisible under unpolarized light sources and becoming visible under a polarizing plate. In the present invention, the image becoming visible under a polarizing plate can be obtained from a birefringent pattern.

### [The definition of a birefringence pattern]

A birefringence pattern means a pattern in which two or more domains of different birefringence are arranged and pictured in the two-dimensional in-plane or three-dimensionally. In particular, two-dimensionally within a plane, the birefringence is defined by the two parameters of the direction of the slow axis in which the refractive index peaks and the magnitude of retardation within the domain. For example, defects of orientation in-plane and the inclination distribution of liquid crystals in the direction of thickness in a phase difference film based on a compound with liquid crystallinity can also be said to constitute a birefringence pattern in a broad sense. However, patterning that is achieved by intentionally controlling birefringence based on a predetermined design is desirably defined as a birefringence pattern. Unless specifically stated otherwise, the birefringence pattern can consist of multiple layers, and the boundaries between the patterns of the multiple layers can align or be different.

### [The product]

The product of the present invention includes a patterned optically anisotropic layer. The product of the present invention may also include other functional layers that will be described below in addition to the patterned optically anisotropic layer. The product of the present invention may be a product prepared by applying directly or via other layers an optically anisotropic layer that will be described below, and carrying out steps of drying and patterned light exposure, or may be a product transferring a patterned optically anisotropic layer from a birefringent transfer foil having a temporary support, adhesive layer or the like through a predetermined process. For the embodiment in which a birefringent transfer foil is used, the description in Japanese Unexamined Patent Publication (KOKAI) No. 2010-113249 can be referred to. In the present description, the term "patterned optically anisotropic layer" refers to an optically anisotropic layer having a birefringence pattern. In other words, it refers to an optically anisotropic layer having two or more regions of different birefringence. The patterned optically anisotropic layer preferably has three or more regions of different birefringence. Individual regions of identical birefringence can be continuous or discontinuous in shape. A patterned optically anisotropic layer can be prepared by using a layer formed from a composition containing a liquid-crystal compound and forming a pattern of birefringence by a method including a patterned light exposure. However, the preparation method is not particularly limited as far as a layer having different birefringence can be formed.

A base material, to which the patterned optically anisotropic layer is provided in the product of the present invention, usually corresponds to a product that has not been applied with a latent image of birefringent pattern, and a support that will be described below may correspond to the base material. Examples of the base material include products made of paper, plastic, metal or the like. Specific examples of the base product are not particularly limited and include plastic cards employed as prepaid cards, ID cards, and the like; various certificates; marketable securities; gift certificates; and the packages of commercial products such as luxury brand products, cosmetics, drugs, and tobacco. Products having a metal reflective surface are preferably employed. Examples of such base materials include the surface of digital cameras, the inside surface of wristwatches, the inside surfaces of pocket watches, the surfaces of the cases of personal computers, the inner and outer surfaces of mobile phones, the inner and outer surfaces of portable music players, the covers of cosmetics and beverages, the inner and outer surfaces of PTP packages employed for confections and pharmaceuticals, the outer surfaces of the metal cans of drug packages, the outer surfaces of precious metals, the outer surfaces of jewelry, and transparent packaging containing one of the products having a metal reflective surface given by way of example above.

### [Applications of a patterned birefringent product]

The birefringence pattern of the product of the present invention is normally either nearly colorless or transparent, and nearly invisible or permits only the identification of an image based on a print layer or the like. However, when such products are viewed through a polarizing plate, an additional characteristic contrast or colors are exhibited and can be readily visibly recognized. Utilizing this property, the product of the present invention can be employed as means of preventing forgery, for example. That is, using a polarizing plate, images with multiple colors that are normally nearly invisible to the naked eye can be made out in the patterned birefringent product of the present invention. When a birefringence pattern is copied without the intervention of a polarizing plate, nothing is picked up. Conversely, when copied through a polarizing plate, a permanent pattern, that is, a pattern that is visible even without the polarizing plate, remains. Accordingly, it is difficult to duplicate a birefringence pattern. Such methods of producing birefringence patterns are not widespread and the materials are also quite unique. Thus, such products are thought to be suited to use as means of preventing counterfeiting.

The birefringence pattern on the surface of the product of the present invention does not only have security functions based on latent images. When coded with bar codes, QR codes, or the like, they can carry digital information. Digital encryption is also possible. By forming high-resolution latent images, a micro latent image that cannot be made out with the naked eye even through a polarizing plate can be printed, thereby further enhancing security. Additionally, security can be enhanced by combining such a device with the printing of invisible ink, such as UV fluorescent ink or IR ink.

The product to which a birefringence pattern has been transferred can be added with functions other than security functions. They can be combined with product information display functions such as price tags and 'Best used by' dates and water immersion functions achieved by the printing of ink that changes color when exposed to water.

### [The structure of the product of the present invention]

The product of the present invention comprises at least one patterned optically anisotropic layer and a reflective layer having a function selectively reflecting an incident light to a specific direction. In the present description, the term "patterned optically anisotropic layer" means an optically anisotropic layer in which regions of different birefringence are present in the form of a pattern. The patterned optically anisotropic layer can be readily fabricated using the birefringence pattern builder described in paragraphs [0053] to [0146] of Japanese Unexamined Patent Publication (KOKAI) No. 2009-69793, for example, but the method of fabrication is not specifically limited as far as it yield a layer comprised of regions of different birefringence present in the form of a pattern. In the figures, regions of different birefringence are illustrated as 101A, 101B, and 101C.

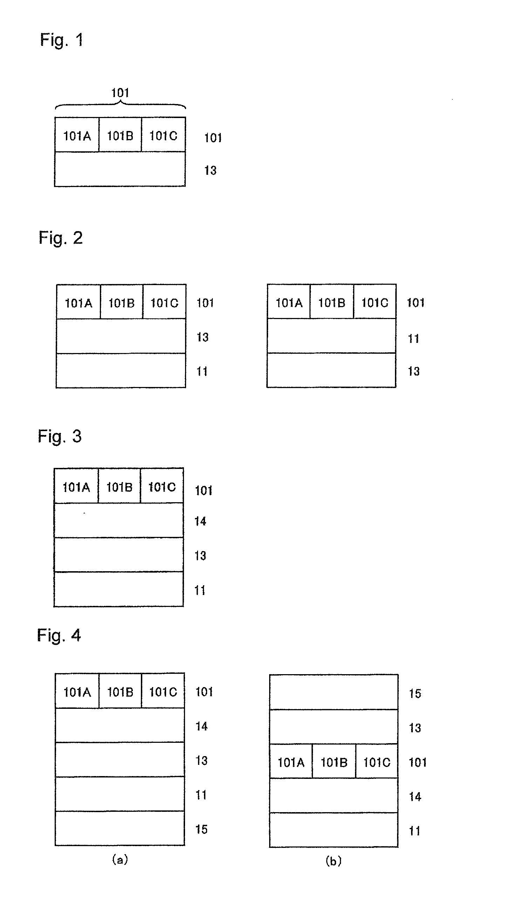

Fig. 1 shows the structures of the most basic structure of the products of the present invention having a patterned optically anisotropic layer 101 and a reflective layer 13.

In the observation of the latent image of the product of the present invention, the light source and the observation point are both on the same side as viewed from patterned optically anisotropic layer, and a reflective layer is present on the opposite side of the patterned optically anisotropic layer of the product of the present invention from the observation point. In that case, the light exiting a polarized light source prepared using a polarizing plate or the like passes through the product of the present invention, reflects off the reflective surface, passes back through the product having a birefringence pattern, outputing a different elliptically polarized state in-plane. Finally, it passes through the polarizing plate on the observation point side, rendering the information visible. Here, the polarizing plate can be a linear polarizing plate, a circular polarizing plate, or an elliptical polarizing plate, and the polarizing plate itself can have a birefringence pattern or a dichroic pattern. The same polarizing plate can be used for the light source side (incident light) and observation side (reflecting light). The reflective layer 13 can double as a highly reflective hologram layer, an electrode layer, or the like.

Figs. 2 (a) and (b) are examples having support 11. The reflective layer can be on the optically anisotropic layer side or the opposite side of the support, but is preferably on the optically anisotropic layer side because this places few limitations on the support.

Fig. 2(a) shows an example having a reflective layer provided on support (11), and a patterned optically anisotropic layer on the reflective layer. For the preparation of the configuration shown in Fig. 2(a), a commercially available reflective sheet, particularly a retroreflective sheet, can be employed. A retroreflective sheet normally corresponds to an object having a retroreflective layer formed on a support. A product of configuration having no reflective layer 13 in the Figure can be prepared and then a commercially available retroreflective sheet can be attached to the product. Such a preparation method is preferable because the method can be free of influence of the temperature at the stage of forming the birefringent pattern, even when a retroreflective sheet having low thermal resistance is employed. Although not specifically limited, a retroreflective sheet can be attached by pressure bonding. A retroreflective sheet that is employed preferably has a flat surface.

Fig. 2(b) shows an example having a reflective layer opposite to a patterned optically anisotropic layer with respect to support (11). In such a configuration, a transparent support is preferably employed as support. A product having configuration of Fig. 2(b) can be prepared by forming a patterned optically anisotropic layer on a surface of support having a reflective layer, the surface being opposite to the reflective layer. Further, a product of configuration having no reflective layer 13 in the Figure can be prepared and then a retroreflective layer can be bonded to the surface of the support opposite to the surface on which the patterned optically anisotropic layer is provided. Although not shown in figures, an adhesive layer can be provided between the support and the reflective layer. Such a preparation method is preferable because the method can be free of influence of the temperature at the stage of forming the birefringent pattern, even when a retroreflective sheet having low thermal resistance is employed. In a configuration of Fig. 2(b) having support between a patterned optically anisotropic layer and a reflective layer, pattern of the latent image may be limited when the support is thick. Thus, with the configuration of Fig. 2(b), the support is preferably a film-shaped support of the thickness of 20 micrometers to 100 micrometers, preferably 25 micrometers to 50 micrometers. When such a configuration is employed in a product employed in seal-type, flatness is required in the structure of the retroreflective layer (a retroreflective sheet can be also employed), because both surfaces need to be bonded. To achieve the flatness, air layer can be included, or reflective structure by using a mirror can be provided. A retroreflective layer will be described below.

The support per se can have a function for reflecting light in a specific direction to achieve the structure of Fig.1. In such a case, the support that is also a reflective layer preferably has thermal resistance and is suitable to be prepared by using a roll. The support in such a case preferably has sufficient flatness to be applied with a coating liquid at one side, and sufficient flatness to be bonded at the other side.

The product shown in Fig. 3 is an example having an orientation layer 14. When employing a layer formed of an optically anisotropic layer that has been fixed by polymerization by heating or irradiation with light after applying and drying a solution containing a liquid-crystal compound to form a liquid-crystal phase as patterned optically anisotropic layer 101, orientation layer 14 functions to facilitate orientation of the liquid-crystal compound.

Figs. 4 (a) and (b) are examples of products of the present invention each having an adhesive layer 15. An adhesive layer becomes necessary when fabricating a patterned birefringent product such as a seal label. Generally, mold-releasing paper or a mold-releasing film is bonded to the adhesive layer, which is preferable from a practical perspective. Further, it can be a special adhesive layer such that any attempt to peel it off once bonded to the targeted material causes adhesive to remain on the targeted material in a specific pattern.

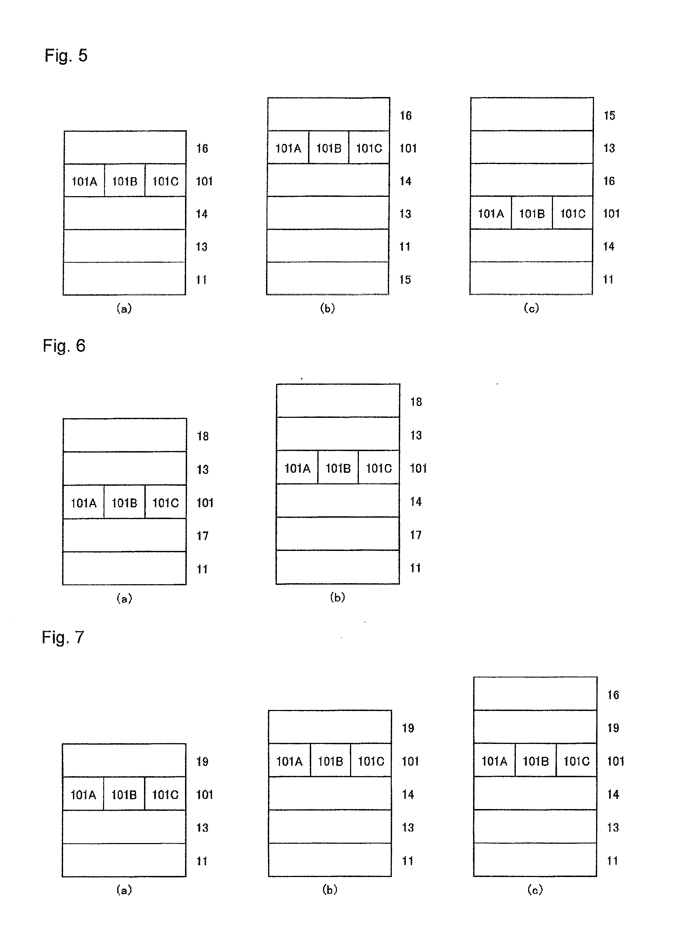

Figs. 5(a) to (c) are examples of products of the present invention having printed layers 16. A printed layer is generally a layer that that gives a visible image superimposed on an invisible birefringent pattern. The invisible birefringent pattern can also be combined with invisible security printing by means of a UV fluorescent dye or IR dye. The printed layer can be above or beneath the optically anisotropic layer, or can be on the opposite side of the support from the optically anisotropic layer. If the printed layer transmits light, when rendering a latent image based on a birefringence pattern visible with a filter, the print and latent image become visible in combination.

Figs. 6(a) and (b) are examples of transfer-type products of the present invention each having a dynamic property control layer 17 and a transfer layer 18. A dynamic property control layer is a layer that controls the separation property so that an optically anisotropic layer is transferred to the targeted material when prescribed conditions are satisfied when the transfer layer is brought into contact with the targeted material. A separation layer imparting a separating property to an adjacent layer and a cushion layer that increases transferability by applying uniform stress during transfer are examples of dynamic property control layers. In addition to common adhesives and contact adhesives, examples of the transfer layer include hot melt contact adhesives that develop adhesiveness when heated, UV contact adhesives that develop adhesiveness when exposed to UV radiation, and layers on which the pattern to be transferred is printed in the form of a contact adhesive. Although not shown in the figure, such a layer can also function as both an orientation layer and a dynamic property control layer. The product of the present invention can be prepared by employing a transfer material not having a reflective layer 13, and attaching it to a substrate having a surface having a function selectively reflecting an incident light to a specific direction.

Figs. 7(a) to (c) show examples having surface layers 19. Examples of surface layers include hardcoat layers for surface protection, water-repellent layers to keep fingerprints from sticking and to prevent doodling with magic markers, electrically conductive layers imparting touch panel properties, blocking layers that make the product invisible to an IR camera by not transmitting IR radiation, circularly polarized light-selective reflective layers in which an image is made to disappear by a circularly polarized light filter by not passing left or right circularly polarized light, photosensitive layers imparting photosensitivity to an optically anisotropic layer, antenna layers functioning as RFID antennas, immersion-detecting layers that detect immersion in water by changing color or the like when immersed in water, thermotropic layers that change color based on temperature, coloration-filtering layers that control the colors of latent images, polarized layers in which latent images become visible when a switch is made between polarized light/unpolarized light on the light source side of transmitting-type product, magnetic layers that impart magnetic recording properties, as well as matting layers, scattering layers, lubricating layers, photosensitive layers, antistatic layers, and resist layers. The surface layer may also correspond to an additive layer for subsequently adding a plasticizer or a photopolymerization initiator to a patterned optically anisotropic layer (or a layer for forming the patterned optically anisotropic layer).

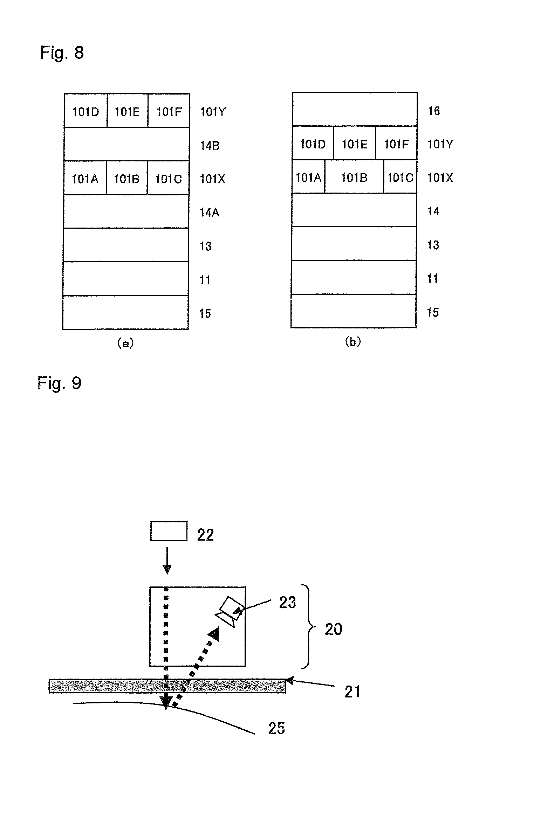

The products of the present invention shown in Figs. 8(a) and (b) have multiple patterned optically anisotropic layers. The in-plane slow axes of the multiple optically anisotropic layers can be identical or different. Although not shown, there can be three or more patterned optically anisotropic layers. By providing two or more optically anisotropic layers of mutually different retardation or slow axes and imparting independent patterns to each, latent images with various functions can be formed.

### [Reflective layer]

The product of the present invention has a reflective layer having a function selectively reflecting an incident light to a specific direction. The ratio of the amount of the light reflected in the direction identical to the incident light to the amount of the incident light (selectivity) may be 70 % or more, 80 % or more, 90% or more, or 95% or more, and the like, preferably 99% or more, and more preferably 100%.

### [Retroreflective layer]

A preferable example of a reflective layer having a function selectively reflecting an incident light to a specific direction includes a retroreflective layer. A retroreflective layer has a function for reflecting the light entered to the layer to the incident direction. A retroreflective layer can reflect illuminated light to the direction of the light source. Thus intense reflected light can be observed even when the light is observed near the light source away from the retroreflective layer. In observation near a light source or observation with a half mirror arranging a light source and an observation camera concentrically, a reflected light of the illuminated light from the light source can again be received in a condition with little influence of environmental light. Thus, when special light such as modulated light or polarized light (linear polarized light, elliptically polarized light, circularly polarized light,) is illuminated, even light affected by the special light can be received at a remote position without being buried by environmental light.

In a patterned birefringent product employing a reflective layer with no retroreflecting properties, its latent image due to the reflected light buries in environmental light when a polarized light is illuminated. Thus the remote visibility of the latent image becomes low. In a product having a retroreflective layer, light is reflected in the direction of light source by the retroreflection. Thus, even when the illuminated light is weaker than environmental light, the latent image can be identified remotely. When a birefringent pattern is on a curved surface, such as the case where a patterned birefringent product of a seal type is attached to a curve, visual angles from illumination varies and illuminated light specularly reflects, and thus identification of the latent image from a certain direction becomes difficult. However, by employing a retroreflective layer, light reflected on a curve also returns to the direction of the incident light, and is free of influence of the curve.

The distance for identification of the latent image is not particularly limited and for example a latent image of approximately 10 mm in width can be viewed at the position away from the surface of the product presenting the latent image by 0.1 m to 5 m, preferably 0.2 m to 2 m. When identification is conducted using a device of photographing, the image can be identified 0 to 10 m, preferably 0 to 5 m from the surface, including contact observation and telescopic observation.

In the present Description, "remote" means a distant position, and the distance is not particularly limited. The phrase such as "can be identified remotely" means, for example, with respect to a latent image of approximately 10 mm in width, identification at 2 m to 5 m from the surface of the product presenting the latent image, or when identification is conducted using a device of photographing, identification at 2 m to 10 m, or 5 m to 10 m from the surface, including telescopic observation.

Typical examples of the retroreflective layer include a corner cube type reflective layer described in Japanese Unexamined Patent Publication (KOKAI) No. 2006-18040 or Published Japanese translation of WO2005/01527, No.2006-524346, and a reflective layer employing transparent spheres described in Japanese Unexamined Patent Publication (KOKAI) No.2008-15363. A corner cube has a surface consisting of convexo-concave structure of triangular pyramids, and can retroreflect light by totally reflecting light entered from the side of substrate at air interface. When the convexo-concave surface of triangular pyramids of corner cube is mirror-processed by vapor deposition or the like, the light entered from the side of air can be retroreflected. In the reflective structure using transparent spheres, reflection occurs inside the spheres, and the light is reflected in the direction identical to the direction of the incident light, resulting in the retroreflective function. A commercially available retroreflective layer can be used as the retroreflective layer. Examples of commercially available retroreflective layer or retroreflective sheet include enclosed lens-type retroreflective sheet FMG-H8512 (Nippon carbide industries co., Inc.), enclosed type reflective sheet 4600 series (Unitika sparklite Ltd.), enclosed lens-type 3200 series (Sumitomo 3M Limited), and the like.

### [The patterned optically anisotropic layer]

The patterned optically anisotropic layer is not particularly limited as far as the patterned optically anisotropic layer is an optically anisotropic layer having two or more regions of different birefringence. Examples include layers prepared through predetermined steps from the optically anisotropic layer disclosed in Japanese Unexamined Patent Publication (KOKAI) No. 2009-69793 as set forth above. The optically anisotropic layer is preferably a layer formed from a composition containing a liquid-crystal compound. Since temperature change and humidity change can be reduced, the liquid-crystal compound is preferably a discotic liquid-crystal compound or a rod-like liquid-crystal compound having reactive groups. It is of still greater preference for the above composition to contain a liquid-crystal compound having two or more reactive groups per liquid-crystal molecule. In the case of a mixture of two or more liquid-crystal compounds, at least one of the liquid-crystal compounds preferably has two or more reactive groups.

A liquid-crystal compound having two or more reactive groups with different crosslinking mechanisms is preferably employed. An optically anisotropic layer containing a polymer having an unreacted reactive group can then be prepared by causing just a portion of the two or more reactive groups to polymerize through the selection of conditions. The crosslinking mechanism is not specifically limited, and can consist of a condensation reaction, hydrogen bonding, polymerization, or the like. Of the two or more mechanisms, at least one is preferably polymerization, and the use of two or more different forms of polymerization is preferable. Generally, not only the vinyl groups, (meth)acrylic groups, epoxy groups, oxetanyl groups, and vinyl ether groups that are employed in polymerization, but also hydroxyl groups, carboxylic acid groups, amino groups, and the like can be employed in the crosslinking reaction. Specific examples of preferable rod-like liquid-crystal compounds include the compounds disclosed in Japanese Unexamined Patent Publication (KOKAI) No. 2009-69793.

The product of the present invention can be prepared by preparing a patterned optically anisotropic layer through predetermined steps from a birefringence pattern builder including an optically anisotropic layer and if necessary forming additional layers. The steps conducted for preparing the patterned optically anisotropic layer are not particularly limited and examples include patterned light exposure, heating, and thermal writing. A patterned optically anisotropic layer can be efficiently prepared preferably by conducting a patterned light exposure and heating in this order on a birefringence pattern builder.

### [Patterned light exposure]

In the present description, the term "patterned light exposure" means exposure conducted in a manner that some of the regions of a birefringence pattern builder are exposed to light or exposure conducted under different exposure conditions in two or more regions. In exposures conducted under different exposure conditions to each other, no exposure (unexposed regions) may be included. The patterned light exposure technique employed can be contact exposure with a mask, proximity exposure, projection exposure, or the like. Scanning exposure in which a laser, electron beam, or the like is focused on a determined position, without employing a mask, to directly draw an image can also be employed. When the form of the birefringence pattern builder is sheet-like, batch-type light exposure can be employed and when the form of the birefringence pattern builder is roll-like, Roll to Roll light exposure can be employed. The illumination wavelength of the light source used in exposure preferably has a peak at 250 to 450 nm, and more preferably, has a peak at 300 to 410 nm. Specific examples include ultra-high-pressure mercury lamps, high-pressure mercury lamps, metal halide lamps, and blue lasers. The preferred exposure level is normally about 3 to 2,000 mJ/cm², more preferably about 5 to 1,000 mJ/cm², and optimally, about 10 to 500 mJ/cm². The resolution in patterned light exposure is preferably 1,200 dpi or higher to permit the formation of a microprint latent image. To increase the resolution, it is preferable and necessary for the patterned optically anisotropic layer to be solid during patterned light exposure, and for the thickness to be 10 micrometers or less. To achieve a thickness of 10 micrometers or less, the patterned optically anisotropic layer is preferably formed of a layer containing a polymerizable liquid-crystal compound the orientation of which has been fixed. More preferably, the polymerizable liquid-crystal compound contains two or more types of reactive groups with different crosslinking mechanisms. The center core employed in the Roll to Roll light exposure is not particularly limited, the outer diameter of the center core is preferably about 10 to 3000mm, more preferably about 20 to 2000mm and further preferably about 30 to 1000mm. Tension at the rolling to the center core is not particularly limited and is preferably about 1 N to 2000N, more preferably about 3N to 1500N and further preferably about 5N to 1000N.

### [Exposure conditions during patterned light exposure]

In the course of conducting the exposure of two or more regions of the birefringence pattern builder under mutually different exposure conditions, the "two or more regions" may or may not have overlapping portions. However, the regions preferably do not have overlapping portions. Patterned light exposure can be conducted in multiple exposure cycles; can be conducted for example in a single exposure cycle using a mask or the like having two or more regions exhibiting different transmission spectra based on the region; or the two can be combined. That is, during patterned light exposure, exposure can be conducted such that two or more regions that have been exposed under different exposure conditions are produced. The scanning exposure is preferable because, in the scanning exposure, the exposure conditions can be varied for each region by the techniques of varying the light source intensity by exposure region, changing the illumination spots of the exposure regions, changing the scan rate, and the like.

The exposure conditions are not specifically limited. Examples include the peak exposure wavelength, the exposure illuminance, the exposure time, the exposure level, the temperature during exposure, and the atmosphere during exposure. Of these, from the perspective of the ease of adjusting exposure conditions, the peak exposure wavelength, the exposure illuminance, the exposure time, and the exposure level are preferred, and the exposure illuminance, exposure time, and exposure level are more preferred. The regions that are exposed under mutually different exposure conditions during patterned light exposure are subsequently subjected to a baking step and exhibit mutually different birefringence that is controlled based on the exposure conditions. In particular, different retardation values are imparted to the regions. That is, by adjusting the exposure conditions for each region during patterned light exposure, a birefringence pattern of desired retardation that differs by region can be obtained after the baking step. The exposure conditions can be varied continuously or discontinuously between two or more exposure regions being exposed under different exposure conditions.

### [Mask exposure]

Exposure employing an exposure mask is useful as a means of producing exposure regions under different exposure conditions. For example, exposure can be conducted with an exposure mask so that only one region is exposed. Then exposure with a separate mask or total surface exposure can be conducted with the temperature, atmosphere, exposure illuminance, exposure time, and exposure wavelength changed. In this manner, exposure conditions of the region exposed first and the regions subsequently exposed can be readily changed. Masks having two or more regions exhibiting different transmission spectra to each other are particularly useful as masks for changing the exposure illuminance or exposure wavelength. In that case, different exposure illuminances and exposure wavelengths in multiple regions can be achieved in a single exposure cycle. Different exposure levels can also be imparted with an identical period of exposure under different exposure luminances.

### [Scanning exposure]

Scanning exposure can be conducted by applying an image drawing device to form a desired two-dimensional pattern on a drawing surface with light, for example.

One representative example of such a drawing device is an image recording device that is configured to use a laser beam deflection scanning means to scan an object that is being scanned with a laser beam directed from a laser beam generating means to record a prescribed image or the like. This type of image recording device modulates the laser beam being directed from the laser beam generating means based on an image signal during the recording of the image or the like (Japanese Unexamined Patent Publication (KOKAI) Heisei No. 7-52453).

A device in which recording is conducted by scanning a laser beam in a secondary scan direction on an object being scanned that has been adhered on the outer circumference surface of a drum rotating in a primary scan direction, and a device in which recording is conducted by rotationally scanning a laser beam over an object being scanned that has been adhered to the cylindrical inner circumference surface of a drum can be employed (Japanese Patent No. 2,783,481).

A drawing device forming a two-dimensional pattern on a drawing surface with a drawing head can also be employed. For example, an exposure device forming a desired two-dimensional pattern on the exposure surface of a photosensitive material or the like with an exposure head, which is employed to fabricate semiconductor substrates and print plates, can be employed. A typical example of such an exposure head is equipped with a pixel array with multiple pixels that generates a group of light points constituting a desired two-dimensional pattern. By operating this exposure head while displacing it relative to an exposure surface, a desired two-dimensional pattern can be formed on the exposure surface.

As an exposure device such as those set forth above, for example, an optical device has been proposed that forms a desired image on an exposure surface by displacing a digital micromirror device (DMD) in a prescribed scan direction on an exposure surface, inputting frame data comprised of multiple drawing point data corresponding to the multiple micromirrors into the memory cells of the DMD based on the displacement in the scan direction, and sequentially forming a group of drawing points corresponding to the micromirrors of the DMD in a time series (Japanese Unexamined Patent Publication (KOKAI) No. 2006-327084).

In addition to the above DMD, a transmitting-type spatial light-modulating element can be employed as the spatial light-modulating element provided on an exposure head. The spatial light-modulating element can be of either the reflecting type or transmitting type. Additional examples of spatial light-modulating elements include the micro-electrical mechanical system (MEMS) type of spatial light-modulating element (Spacial light modulator (SLM)), optical elements that modulate transmitted light by means of an electro-optical effect (PLZT elements), liquid-crystal light shutters (FLC), and other liquid-crystal shutter arrays. The term "MEMS" is a general term for microsystems integrating microscopic sensors, actuators, and control circuits by means of micromachining technology based on IC manufacturing processes. The term "MEMS-type spatial light-modulating element" means a spatial light-modulating element that is driven by electromechanical operation utilizing electrostatic forces.

A device in which multiple grating light valves (GLVs) are disposed in a two-dimensional configuration can also be employed.

In addition to the above laser beam source, lamps and the like can be employed as the light sources of the exposure head.

### [Patterned light exposure of two or more optically anisotropic layers]

A new transfer material for building birefringence patterns can also be transferred onto a laminate obtained by patterned light exposure on a birefringence pattern builder, and then patterned light exposure can be conducted again. In that case, the retardation values remaining following baking in a region that remains unexposed both the first and second times (which normally have the lowest retardation values), a region that is exposed the first time but is not exposed the second time, and a region that is exposed both the first and second times (which normally have the highest retardation values) can be effectively changed. Regions that are not exposed the first time but are exposed the second time can be thought of as being identical after the second exposure to regions that have been exposed both the first and second times. Similarly, by alternately conducting transfer and patterned light exposure three or four times, four or more regions can be readily prepared. This method is useful when it is desirable to impart differences (differences in optical axis direction, extremely large differences in retardation, and the like) to different regions that cannot be imparted by means of exposure conditions alone.

### [Heating (baking)]

A birefringence pattern can be prepared by heating a birefringence pattern builder that has been subjected to the patterned light exposure at 50°C or higher but not higher than 400°C, preferably at 80°C or higher but not higher than 400°C. As a heating unit, hot-air furnace, muffle furnace, IR heater, ceramic heater, electric furnace, or the like can be employed. When the form of the birefringence pattern builder is sheet-like, batch-type heating can be employed and when the form of the birefringence pattern builder is roll-like, roll-to-roll-type heating can be employed. The center core employed in the roll-to-roll-type heating is not particularly limited, the outer diameter of the center core is preferably about 10 to 3000mm, more preferably about 20 to 2000mm and further preferably about 30 to 1000mm. Tension at the rolling to the center core is not particularly limited and is preferably about 1 N to 2000N, more preferably about 3N to 1500N and further preferably about 5N to 1000N.

The birefringence pattern can contain a region in which the retardation is essentially 0. For example, when an optically anisotropic layer is formed employing a liquid-crystal compound having two or more reactive groups, portions that remain unexposed following patterned light exposure lose their retardation during baking, resulting in a retardation of essentially 0.

Also, a new transfer material for building a birefringence pattern can be transferred onto a birefringence pattern builder that has been baked, after which patterned light exposure and baking can be conducted anew. In that case, combining the first and second exposure conditions, the retardation value remaining after the second baking can be effectively changed. This method is useful when it is desirable to form two regions with birefringence properties that mutually differ in the directions of the slow axes in shapes that do not overlap.

### [Thermal writing]

As set forth above, a retardation of essentially 0 can be achieved by baking unexposed regions. Thus, in addition to a latent image based on patterned light exposure, a latent image based on thermal writing can be included in a patterned birefringent product. Thermal writing can be conducted with a thermal head, or by drawing with an IR or YAG laser or the like. For example, information that must be kept secret (personal information, passwords, management codes of products that could compromise designs, and the like) can be conveniently rendered as latent images in combination with a small printer having a thermal head. Thermal writing IR and YAG lasers that are usually used for corrugated fiberboard containers can be used without any modification.

### [Functional layers]

Examples of the functional layers include a support, an orientation layer, a printed layer, an adhesive layer, and as needed, a releasing layer, a printed layer in addition to the patterned optically anisotropic layer. An adhesive layer, in a product prepared by using a birefringent transfer foil, may also be exemplified. These functional layers can be incorporated into the birefringence pattern builder in advance, or can be formed after fabricating the patterned optically anisotropic layer.

The functional layers can be formed by the dip coating, air knife coating, spin coating, slit coating, curtain coating, roller coating, wire bar coating, gravure coating, and extrusion coating methods (US Patent 2,681,294). In that case, two or more layers can be simultaneously applied. Simultaneous coating methods are described in US Patent Nos. 2,761,791, 2,941,898, 3,508,947, 3,526,528, and by Harasaki, Y., Coating Engineering, p. 253, Asakura Shoten (1973). Methods of formation other than the above can be employed based on the properties of the functional layers.

### [Support]

The support constituting the product of the present invention is not particularly limited and may be rigid or flexible, and a flexible support is preferred. As a rigid support, examples include, although not particularly limited to, known glasses such as soda glass sheet having a silicon oxide film formed on the surface thereof, low-expansion glass, non-alkali glass, and quartz glass sheets, metal plates such as aluminum plate, iron plate, and SUS plate, resin plates, ceramic plates, and stone slabs. Examples of flexible supports include plastic films such as cellulose esters (such as cellulose acetate, cellulose propionate, and cellulose butyrate), polyolefins (such as norbornene polymers), poly(meth)acrylic acid esters (such as polymethyl methacrylate), polycarbonates, polyesters, polysulfones, and norbornene polymers, paper, aluminum foil, and cloth. Due to ease of handling, the thickness of the rigid support is preferably 100 to 3000 micrometers, and more preferably, 300 to 1500 micrometers. The thickness of the flexible support is preferably 3 to 500 micrometers, and more preferably 10 to 200 micrometers.

As described above, the support can be the base material for formation of the birefringent pattern.

### [Orientation layer]

The product of the present invention may have an orientation layer, for example, when a layer is used which is prepared from an optically anisotropic layer by applying and drying the solution containing a liquid-crystal compound to form a liquid crystal phase and by subjecting liquid crystal phase to heating and light irradiation to achieve polymerization and fixation. An orientation layer is provided generally on the support or temporary support, or on an undercoating layer applied on the support or temporary support. The orientation layer functions to determine the orientation of the liquid-crystal compound provided on the orientation layer. The orientation layer can be any layer as far as it can impart an orientation to the optically anisotropic layer. Preferred examples of the orientation layer include rubbed layers of organic compounds (preferably polymers); optical orientation layers that exhibit a liquid-crystal orienting property by irradiation with polarized light, such as azobenzene polymers and polyvinyl cinnamate; oblique vapor-deposition layers of inorganic compounds; microgrooved layers; cumulative films of omega-tricosanoic acid, dioctadecyl methyl ammonium chloride, methyl stearate or the like formed by the Langmuir-Blodgett method (LB method); and films in which a dielectric is oriented by imparting an electric or magnetic field. In the rubbed form of orientation films, polyvinyl alcohol is preferably contained, and the ability to crosslink with at least one layer either above or below the orientation layer is particularly preferred. An optical orientation layer and microgrooves are preferred as methods of controlling the direction of orientation. Compounds that exhibit orientation based on dimers, such as polyvinyl cinnamate, are particularly preferred as optical orientation layers. Embossing with a master roll manufactured in advance by mechanical or laser processing is particularly preferable for microgrooves.

### [Adhesive layer]

The product of the present invention may include an adhesive layer, for example when the product is prepared by using a birefringent transfer foil. As the adhesive layer, a pressure-sensitive resin layer, a photosensitive resin layer and heat-sensitive resin layer can be used.

### [The printed layer]

The product of the present invention can include a printed layer to achieve visual effects as needed. Examples of printed layers include layers in which visible patterns, or patterns that are visible with UV or infrared radiation, have been formed. Since UV fluorescent ink and IR inks are themselves security printings, they are desirable to enhance security. The method of forming the printed layer is not specifically limited. Commonly known relief printing, flexo printing, gravure printing, offset printing, screen printing, inkjet printing, xerography, and the like can be employed. Various inks can be employed. From the perspective of durability, UV ink is preferably employed. Microprinting at a resolution of 1,200 dpi or higher is desirable to enhance security.

### [Indentification of the latent image]

The identification of the latent image of the product of the present invention prepared as above can be achieved through a polarizing plate. As the polarizing plate, a polarizing plate for transmitting incident light (light source side) and a polarizing plate for transmitting reflected light (observation side) can be used, and both can be identical. As the product of the present invention has a reflective layer having a function selectively reflecting an incident light to a specific direction, the polarizing plate at the observation side can be arranged approximately perpendicular to the direction of the reflected light on the optical path of the light reflected in a specific direction. Adjustment by rotating the polarizing plate or the product can be conducted for identification of sharp latent image.

When the reflective layer is a retroreflective layer, only one polarizing plate is needed because reflected light returns in the direction identical to the direction of the incident light. The latent image can be sharply identified even when the polarizing plate is arranged remotely from the product of the present invention, i.e., the patterned optically anisotropic layer.

The latent image of the product of the present invention can be identified with a device in which an imaging element is arranged to be aligned in the specific direction that the reflective layer in the product reflects incident light as shown in Fig.9, for example. Such a device can be employed in a manner that the device is in contact with the surface having the latent image of the product of the present invention.

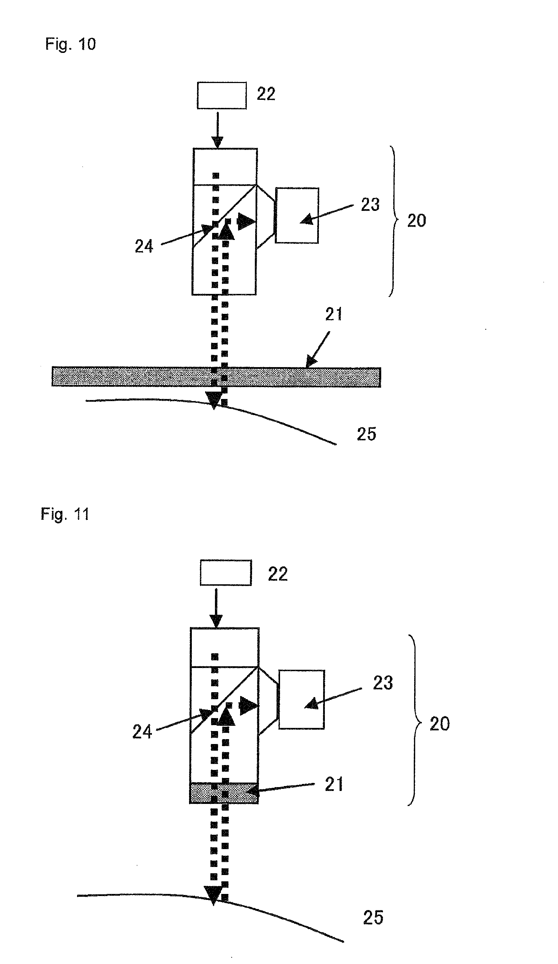

The latent image of the product of the present invention having a retroreflective layer can be identified with a device of photographing latent image in which an optical path for illumination (optical path for incident light) and an optical path for imaging (optical path for reflected light) are in parallel as shown in Fig.10, for example. The optical path for incident light and optical path for reflected light can be substantially identical. As shown in the figure, the reflected light can be introduced to the imaging element by a half mirror to make an image.

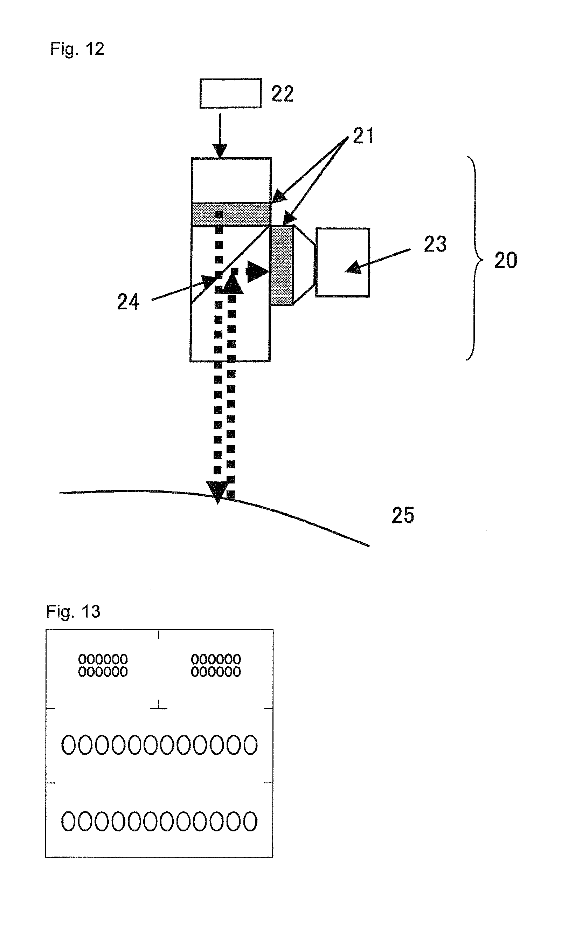

The device of photographing latent image itself can be provided with a polarizing plate as shown in Fig.11. A polarizing plate can be provided at a position which incident light and reflected light can go through and which is preferably approximately perpendicular to the optical path of incident light and optical path of reflected light as shown in Fig.11. Two polarizing plates can be provided near the light source and the imaging element, respectively, as shown in Fig. 12. The configuration shown in Fig.12 can be also applied to imaging of a latent image of a product of a configuration having a reflective layer that has a function reflecting incident light selectively in a specific direction, which is not a retroreflective layer.

A polarizing plate in the device of photographing latent image is preferably provided in a manner that the polarizing plate is rotatable. The direction of the polarizing plate can thus be adjusted to photograph the latent image of the product of the present invention more sharply. For example, one polarizing plate illustrated in Fig. 11 can be so provided as to be rotatable, or either or both of the two polarizing plates can be so provided as to be rotatable. For this purpose, a commercially available holder that makes the polarizing plate(s) rotatable or polarizing plate(s) attached with a rotating ring can be employed to fabricate a device of photographing latent image.

In Figs. 9 to 12, configurations using a light source separately from a device of photographing latent image are shown. However, a light source can be provided in a device of photographing latent image.

### EXAMPLES

The present invention will be described in greater detail below through Examples. The materials, reagents, substance quantities and ratios, operations, and the like that are indicated in the Examples below can be suitably modified without departing from the purpose or spirit of the present invention. Accordingly, the scope of the present invention is not limited to the specific examples given below.

### (Preparation of detachment layer coating liquid FL-1)

The following composition was prepared, filtered through a polypropylene filter with a pore diameter of 0.45 micrometers, and employed as detachment layer coating liquid FL-1.

| Detachment layer coating liquid composition (mass %) | |
|---|---|
| Polymethyl methacylate (weight-average molecular weight=50,000) | 16.00 |
| Methyl ethyl ketone | 74.00 |
| Cyclohexanone | 10.00 |

### (Preparation of orientation layer coating liquid AL-1)

The following composition was prepared, filtered through a polypropylene filter with a pore diameter of 30 micrometers, and employed as orientation layer coating liquid AL-1.

| Orientation layer coating liquid composition (mass %) | |
|---|---|
| Polyvinyl alcohol (PVA205, manufactured by Kuraray Go.,LTD. | 3.23 |
| Polyvinylpyrrolidone (Luvitec K30, manufactured by BASF) | 1.50 |
| Distilled water | 57.11 |
| Methanol | 38.16 |

### (Preparation of optically anisotropic layer coating liquid LC-1)

The following composition was prepared, filtered through a polypropylene filter with a pore diameter of 0.45 micrometers, and employed as optically anisotropic coating liquid LC-1.

LC-1-1 was a liquid-crystal compound having two reactive groups. One of the two reactive groups was a radically reactive group in the form of an acrylic group, and the other was a cationically reactive group in the form of an oxetane group.

| Optically anisotropic layer coating liquid composition (mass%) | |
|---|---|
| Polymerizable liquid-crystal compound (LC-1-1) | 32.88 |
| Horizontal orientation agent (LC-1-2) | 0.05 |
| Cationic photopolymerization initiator | |
| (CPI100-P, manufactured by San-Apro) | 0.66 |
| Polymerization controlling agent | |
| (Irganox 1076, manufactured by Chiba Specialty Chemicals) | 0.07 |
| Methyl ethyl ketone | 46.34 |
| Cyclohexanone | 20.00 |

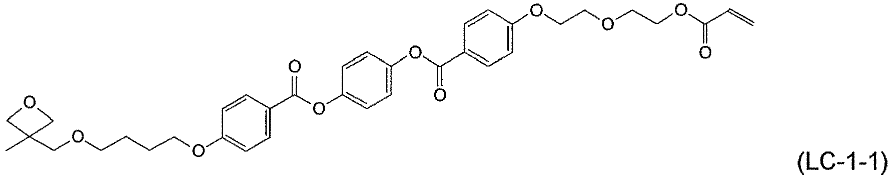

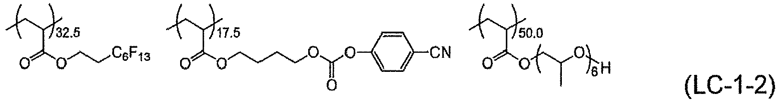

### (Preparation of additive layer coating liquid OC-1)

The composition indicated below was prepared, passed through a polypropylene filter with a pore size of 0.45 micrometers, and employed as additive layer coating liquid OC-1. A radical photopolymerization initiator RPI-1 was employed in the form of 2-trichloromethyl-5-(p-styrylstyryl)-1,3,4-oxydiazole. B-1 is a copolymer of methyl methacrylate and methacrylic acid with a copolymer composition ratio (molar ratio) of 60/40.

| Additive layer coating liquid composition (mass %) | |
|---|---|
| Binder (B-1) | 7.63 |
| Radical photopolymerization initiator (RPI-1) | 0.49 |
| Surfactant | |
| (Megafac F-176PF, manufactured by Dainippon Ink Chemical Industries) | 0.03 |
| Methyl ethyl ketone | 68.89 |
| Ethyl acetate | 15.34 |
| Butyl acetate | 7.63 |

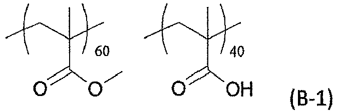

### (Preparation of heat-sensitive adhesive layer coating liquid AD-1)

The following composition was prepared, passed through a polypropylene filter with a pore size of 0.45 micrometers, and employed as adhesive coating liquid AD-1.

| Heat-sensitive adhesive layer coating liquid composition (mass %) | |
|---|---|
| Polyester hot melt resin solution (PES375S40, manufactured by Toagosei) | 37.50 |
| Methyl ethyl ketone | 62.50 |

### (Preparation of birefringence pattern builder P-1)

Aluminum was deposited 60nm on a surface of a polyethylene naphthalate film of 50 micrometers in thickness (Teonex Q83, Teijin DuPont), to prepare a reflective layer with support. On the surface to which the aluminum was deposited detachment layer coating liquid FL-1 was applied by using a wire bar, and the coating was dried to obtain a detachment layer. The dry thickness of the detachment layer was 2.0 micrometers. On the surface of the dried detachment layer, orientation layer coating liquid AL-1 was applied by using a wire bar, and the coating was dried to obtain an orientation layer. The dry thickness of the orientation layer was 0.5 micrometers.

After a rubbing treatment of the orientation layer, a wire bar was used to apply optically anisotropic layer coating liquid LC-1, the coating was dried for 2 minutes at a film surface temperature of 90°C to impart a liquid crystal phase, and a 160 W/cm air-cooled metal halide lamp (manufactured by EYE GRAPHICS) was employed in air to radiate UV radiation, fix the orientation state of the liquid crystal phase, and form an optically anisotropic layer of 4.5 micrometers in thickness. In this process, the luminance of the UV radiation employed was 600 mW/cm² over the UV-A region (cumulative wavelengths 320 to 400 nm) and the irradiation energy was 300 mJ/cm² over the UV-A region. The retardation of the optically anisotropic layer was 400 nm. The polymer was a solid at 20°C. Finally, additive layer coating liquid OC-1 was applied on the optically anisotropic layer, the coating was dried, and an additive layer of 0.8 micrometers in thickness was formed to complete birefringence pattern builder P-1.

### (Preparation of birefringent transfer foil F-1)

Birefringence pattern builder P-1 was subjected to a pattern exposure in Roll to Roll at exposure levels of 0 mJ/cm² and 40 mJ/cm² as shown in Fig. 13 with a digital exposure apparatus (INPREX IP-3600H, manufactured by Fuji Film Co., Ltd.) by laser scanning exposure. The exposure was conducted such that in the figure, the exposure level in region denoted by no shading, was 0 mJ/cm², the exposure level in black region was 40 mJ/cm². Subsequently, a furnace connected to a far infrared radiation heater was employed to heat the surface of the film Roll to Roll for 15 minutes to a temperature of 210°C, thereby patterning the optically anisotropic layer.

Finally, heat-sensitive adhesive layer coating liquid AD-1 was applied on the additive layer by employing a wire bar, the coating was dried, and a heat-sensitive adhesive layer of 2.0 micrometers in thickness was formed to prepare birefringent transfer foil F-1.

### (Evaluation of the birefringent pattern using a retroreflective layer)

A comparative experiment is conducted with birefringent transfer foil F-1 prepared above transferred to a retroreflective tape (Sumitomo 3M Limited, 3290) or a diffuse reflective sheet (TSUJIDEN Co.,Ltd., D123).

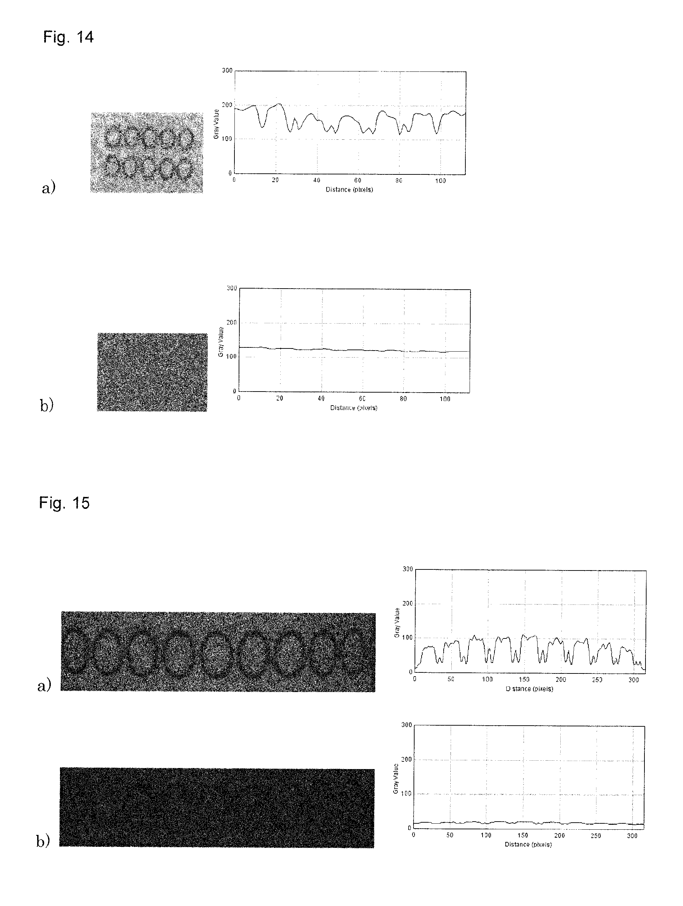

Photographing was conducted by mounting C mount lens of focal distance 25 mm to CMOS camera (LU275 manufactured by Lumenera company). A confocal lighting system was configured by arranging a plate-type beam splitter (Edmund Optics) at 45° in front of the lens and a LED backlight at 90° with respect to the direction of the camera. A flat plate was placed at 1 m away from the camera approximately orthogonally. Each of the above tape and sheet to which the birefringent pattern had been transferred was attached to the flat plate to be measured as a sample. The photographing was conducted under a condition with a room lamp on. The image and a luminance profile of the sample in which the birefringent transfer foil was transferred to the retroreflective tape is shown in Fig. 14a, and the image and a luminance profile of the sample in which the birefringent transfer foil was transferred to the diffuse reflective sheet is shown in Fig. 14b. The figures show that the design is identifiable in the sample using the retroreflective tape even under environmental light, but not in the sample using the diffuse reflective sheet. It was confirmed that the latent image can be observed by using a retroreflective layer, without being influenced by environmental light.

In a similar manner, a cylinder shaped object (6.5 cm diameter) was placed at 1 m away from the camera. In circumferential direction, attached was a tape cut into 5 cm in length of each of the sample in which the birefringent transfer foil was transferred to the retroreflective tape and the sample in which the birefringent transfer foil was transferred to the diffuse reflective sheet. Photographing was conducted in a dark room. The image and a luminance profile of the retroreflective part are shown in Fig. 15a, and the image and a luminance profile of the diffuse reflective part is shown in Fig. 15b. The figures show that the design is identifiable for the full length (5 cm) of the tape in the retroreflective part but the design is not identifiable for diffuse reflective part because the image is dark. It was confirmed that the latent image can be observed relatively uniformly by using a retroreflective layer, even when attached to a curved surface.

### Key to the Numbers

- 101: Patterned optically anisotropic layer
- 11: Temporary support or support
- 13: Reflective layer or semi-transmissive semi-reflective layer
- 14: Orientation layer
- 15: Adhesive layer
- 16: Printed layer
- 17: Dynamic property control layer
- 18: Transfer layer
- 19: Additive layer or surface layer
- 20: Device of photographing a latent image
- 21: Polarizing plate
- 22: Light source
- 23: Imaging element
- 24: Half mirror
- 25: Part of product presenting a latent image

## Claims

1. A product comprising a patterned optically anisotropic layer having two or more regions of different birefringence and a reflective layer having a function selectively reflecting an incident light to a specific direction.

2. The product according to claim 1, wherein the reflective layer is a retroreflective layer.

3. The product according to claim 2, wherein the retroreflective layer comprises a corner cube or a microsphere.

4. The product according to claim 1 or 2, wherein the patterned optically anisotropic layer is formed by a method comprising the following steps (1) to (3) in this order:
(1) heating or irradiating with light a layer formed of a composition comprising a liquid-crystal compound;
(2) subjecting the layer to patterned light exposure; and
(3) heating the layer obtained to 50°C or higher but not higher than 400°C.

5. The product according to any one of claims 1 to 4, which comprises a printed layer.

6. The product according to any one of claims 1 to 5, which comprises a support.

7. The product according to any one of claims 1 to 6, which comprises the patterned optically anisotropic layer, a support, and the reflective layer in that order.

8. The product according to any one of claims 1 to 7, which comprises the patterned optically anisotropic layer, the reflective layer, and a support in that order.

9. The product according to any one of claims 1 to 8, wherein the patterned optically anisotropic layer represents a curve.

10. A device of photographing a latent image that becomes visible in observation of the product according to any one of claims 1 to 9 through a polarizing plate, comprising an optical path system for light illuminating the product, an optical path system for reflecting light, and an imaging element, wherein the imaging element is arranged on the optical path for reflecting light, the reflecting light being a reflecting light of incident light reflected selectively in a specific direction.

11. The device of photographing a latent image according to claim 10, which is provided with a half mirror for reflecting the reflecting light toward the direction of the imaging element.

12. The device of photographing a latent image according to claim 10 or 11 comprising a first polarizing plate arranged approximately perpendicular to the optical path of illuminating light at a position which the illuminating light goes through, and a second polarizing plate arranged approximately perpendicular to the optical path of reflecting light at a position which the reflecting light goes through.

13. The device of photographing a latent image according to claim 12, which has a unit for rotating the polarizing plates independently to each other.

14. The device of photographing a latent image according to claim 10 or 11, wherein the reflective layer is a retroreflective layer, and a polarizing layer is arranged approximately perpendicular to the optical path of illuminatating light and the optical path of reflecting light, at a position which incident light and the reflecting light go through.

15. The device of photographing a latent image according to claim 14, which has a unit for rotating the polarizing plate.

16. The device of photographing a latent image according to any one of claims 10 to 15 having a light source.
